# EUROPEAN PATENT SPECIFICATION

(11) **EP 3 829 110 B1**
(45) Date of publication and mention of the grant of the patent: **01.01.2025**
(21) Application number: 19383061.9
(22) Date of filing: 28.11.2019
(51) Int. Cl.: H04L 41/16, H04L 41/5025, H04L 41/5067

(54) **SELF-MANAGING A NETWORK FOR MAXIMIZING QUALITY OF EXPERIENCE**
SELBSTVERWALTUNG EINES NETZWERKS ZUR MAXIMIERUNG DER QUALITÄT EINER ERFAHRUNG
GESTION AUTOMATIQUE D'UN RÉSEAU POUR MAXIMISER LA QUALITÉ D'EXPÉRIENCE

(43) Date of publication of application: 02.06.2021
(73) Proprietor: Zhilabs S.L., 08029 Barcelona (ES)
(72) Inventor: Arpirez Vega, Julio, Madrid (ES); Zapater Cano, Sergi, Barcelona (ES); Raventós Simón, Joan, Barcelona (ES)
(74) Representative: Grünecker Patent- und Rechtsanwälte PartG mbB

(56) References cited:
- EP-A1- 2 806 594
- EP-A1- 3 331 198
- US-A1- 2014 122 594
- US-A1- 2019 268 214

## Description

### Technical Field

The present disclosure relates to methods and systems for automatically managing an IP network, such as a telecom service provider network. In particular, the present disclosure relates to employing data from subscriber touchpoints to train machine-learning predictors to predict network behavior and to improve the quality of service based on the predictions.

### Background

IP networks deployed by telecom service providers provide access to a data network, such as the Internet, to subscribing IP-capable nodes, thereby allowing subscribers to connect with, for example, the World Wide Web. As reliance of subscribers on services provided by the World Wide Web is ever growing, and as complexity of the networks increases through the omnipresence of IP-capable devices, management of telecom provider networks becomes more demanding.

Many telecom service provider networks employ semiautomatic network management systems using rule-based systems. When, for example, a network node reaches a certain load level, an action is triggered automatically, e.g. alarming network administrators.

To improve the complex task of network management, tools of automatic networking have been developed which allow networks to be self-managing with minimal dependencies on human administrators. Because data networks are increasingly employed for critical operations and are relevant for public safety, methods to acquire high quality observation data related to quality of the service on service provider networks have been proposed.

Solutions of the prior art also employ machine learning to analyze network data to learn patterns and create automatic processes for handling events matching the pattern. However, to train machine learning predictors to the highest performance, tagged data sets are required, which are expensive to obtain. Moreover, when problems in the network appear that are not reflected in the training data, the trained predictor cannot be re-trained in an easy manner since training data for the current problems are not yet available.

An object of the present disclosure is to provide a method and a system whereby a telecom subscriber network can manage itself by acquiring high-quality training data to obtain predictors that can be employed to take the best action to improve service quality of the IP network.

This object is solved by the subject-matter of the independent claims.

Preferred embodiments of the present invention are defined by the dependent claims.

US 2014/122594 A1 describes a processing platform configured to identify metrics that influence user satisfaction with communication services provided by a communication network, and to generate at least one model that relates the identified metrics to user satisfaction scores. The processing platform may be further configured to generate at least one user satisfaction score for a plurality of users of the communication services given specified values of the identified metrics for only a subset of those users.

European Patent Application EP3331198 A1 describes a method for monitoring a DSL network executed by a monitoring device comprising obtaining operational data describing the functioning of a plurality of DSL ports, Service Level Agreement, SLA, data specifying technical requirements associated with respective DSL ports, and ticketing data specifying user complains associated with respective DSL ports; determining quality estimators in function of the operational data and the SLA data; and training a monitoring model in function of the operational data, SLA data, quality estimators and ticketing data. US Patent Application Publication US2019/268214 A1 describes using
machine learning to perform a classification based on a pattern in collected monitoring data and configuration data of an information technology system associated with an onset of an issue, the monitoring data to be collected during an operation of the IT system, and the configuration data representing an architecture of the IT system; predicting, based on the classification, the issue before the issue occurs or before the issue is detected or reported; and generate an indication of the predicted issue. European Patent Application EP2806594 A1 describes evaluating the stability of communication over a telecommunication line comprising ascertaining physical line data characterizing a physical characteristic of each line of first subscriber lines; collecting service quality information describing a quality of a service provided over each line of second subscriber lines; associating the service quality information with the physical line data related to the same particular line; and determining a decision criterion from the physical line data with associated service quality information, wherein the decision criterion is determined for deciding to which stability class the digital subscriber line belongs.

### Summary

The present disclosure provides for a system and a method for generating predictions for improving the service quality of a telecom service provider network. Network conditions data that indicate an objective connection quality of subscribers with a data network via an IP network of the telecom service provider network are correlated with tags extracted from individual, subjective subscriber feedback data received at the telecom service provider network. The subscriber feedback data are obtained based on interactions of subscribers with a Business Support System, BSS, of the telecom service provider network. The tagged network conditions data are employed to train one or more predictors for the service quality of the telecom service provider network.

The trained predictor is employed to predict the service quality of the telecom service provider network based on current network conditions data and is employed to propose actions to improve the service quality. Predictions provided by the predictors may therefore allow identifying and resolving problems in the IP network before subscribers experience a degradation of service quality.

The present invention provides for a computer-implemented method of training and employing predictors according to appended independent claim 1.

According to an embodiment, training of the one or more predictors comprises training a first predictor according to a supervised machine learning algorithm.

According to another embodiment, the training of the one or more predictors comprises training a plurality of models and selecting a model based on a performance metric, wherein the performance metric is based on at least one of an f1 -score, a ROC curve, and an AuC.

The plurality of models may be selected from model families including XGBoost models, Random-Forest models, convolutional neural network models, and recurrent neural network models.

According to another aspect, training of the one or more predictors may also comprise training a second predictor according to an unsupervised machine-learning algorithm disregarding the tags of the tagged network conditions.

According to a further embodiment, the computer-implemented method further comprises employing the rule-based engine to trigger actions, based on the predictions, to improve the service quality of the telecom service provider network.

According to an aspect, the actions may comprise at least one of actions on an operations support system of the telecom service provider network or actions on elements of the data network. According to another aspect, employing the rule-based engine to trigger the actions may comprise applying an automatic root cause analysis.

According to an embodiment, training of the one or more predictors can be performed periodically, or is performed concurrently to generating predictions.

The method may further comprise extracting an explanation from the one or more trained predictors allowing an interpretation of the predictions, wherein extracting the explanation comprises analyzing top impacting factors.

According to another embodiment, the predictions may comprise at least one of predictions of network outages and predictions of network traffic anomalies.

According to an aspect, the network conditions data may comprise at least one of data from data probes, data from voice probes, RAN metrics, RAN traces, metrics of a packet core network of the IP network, network slices metrics, data from Performance Management/Fault Management systems, logs and counters from network elements of the IP network, and service-based architecture messages, wherein the metrics of the packet core network comprise at least one of data on latencies, data on packet drops, data on throughputs, and data on a streaming quality.

The present invention further provides for a system for generating predictions for improving the service quality of a telecom service provider network according to appended independent claim 12.

According to an aspect, the system may also comprise an actuator manager configured to trigger actions, based on predictions of the one or more predictors, to improve the service quality of the telecom service provider network.

According to yet another aspect, the network conditions collection component may be configured for massaging the network conditions data and for coalescing the network conditions data in events supplied to the predictor model manager, and the subscriber touchpoints collection component is configured for massaging the subscriber feedback data and for coalescing the subscriber feedback data in events supplied to the predictor model manager.

### Brief description of the Figures

The accompanying drawings explain the principles of the solution. Further features and advantages will become apparent from the following and, more particularly, from the description as illustrated in the accompanying drawing wherein
**Figure 1** illustrates a block diagram for training one or more predictors for the service quality of a telecom service provider network based on network conditions data and subscriber feedback data;
**Figure 2** illustrates a block diagram for applying one or more predictors for the service quality of a telecom service provider network based on current network conditions data;
**Figure 3** illustrates a process flow diagram for training predictors for the service quality of a telecom service provider network based on correlated network conditions data and subscriber feedback data; and
**Figure 4** illustrates a process flow diagram of a method of employing a predictor for the service quality of a telecom service provider network to trigger actions to improve the service quality of the telecom service provider network.

### Detailed Description

Described herein are systems and methods for generating predictions for the service quality of a telecom service provider network using one or more predictors that have been trained using supervised or unsupervised machine learning algorithms employing network conditions data and subscriber feedback data. For purposes of explanation, numerous examples and specific details are set forth in order to provide a thorough understanding of the described embodiments. The embodiments as defined by the claims may include some or all of the features in these examples alone or in combination with other features described below and may further include modifications and equivalents of the features and concepts described herein. Where an embodiment is a method, steps and elements of the method may be combinable in parallel for a sequential execution.

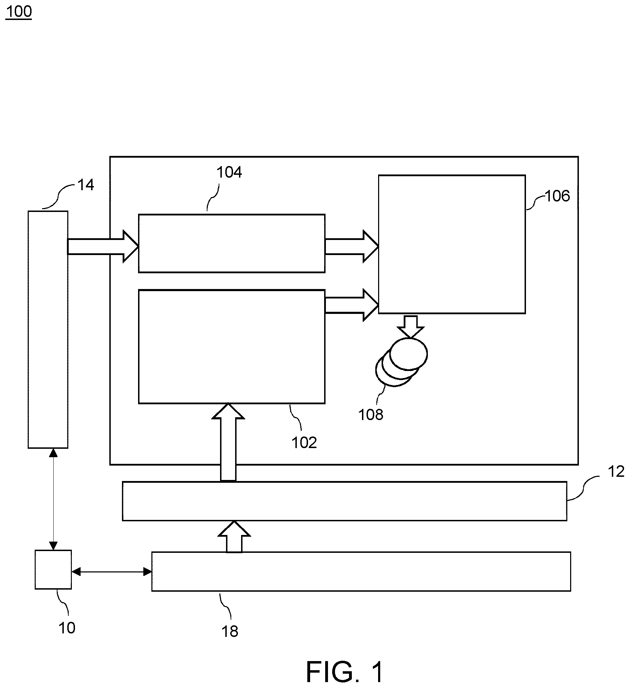

Figure 1 illustrates a block diagram of a system 100 for the training path of one or more predictors 108 for the service quality of a telecom service provider network. A plurality of subscribers 10 is connected to IP network 18 of a telecom service provider network. IP network 18 may allow users to access a data network, such as the Internet, by routing data traffic to and from the subscribers 10 to the data network, so as to allow subscribers 10 to interact with the World Wide Web, or employ other protocols of communication with nodes of the data network.

IP network 18 comprises an access network comprising access nodes that subscribers can connect to, for example by radio networks for mobile phones, or DSL and cable networks for landline services. IP network 18 further comprises a core network such as an Evolved Packet Core network, a 5G core network, or an internet service provider core network. The core network is typically made up of fewer nodes that support larger bandwidths and greater numbers of services than the access network nodes. The core network domain of IP network 18 handles routing of data between networks, between different communication service providers and between geographical regions. Subscribers today have a plurality of IP capable devices in their user domain such as smartphones and routers that connect to the IP network's access network.

The telecom service provider employs one or more Operation Support Systems (OSS) 12 to manage operation of the IP network 18. OSS 12 is typically a combination of hardware and software used to monitor and administer IP network 18. OSS 12 monitors devices and services to ensure they are delivering the capabilities they were configured to deliver. A highly important function of OSS 12 is tracking problems in the IP network 18 by receiving fault messages from network elements of the IP network 18. OSS 12 may include tools for diagnosing and mitigating a fault.

Traditionally, IP networks, such as IP network 18, comprise individual single-purpose network devices such as servers and routers dedicated to a specific role, so that changing a network element required hardware upgrades of a device. Modern data networks move towards a virtualization of the network layer, so that network elements are programmable elements. Under Network Functions Virtualization (NFV), network nodes are implemented as virtual devices and are hence directly programmable. In Software Defined Networking (SDN), network control, e.g. making routing decisions, is separated from data forwarding. As SDN allows connections across the network to be defined and reconfigured by software, SDN and/or NFV makes it possible to realize updates to the network architecture in real time. The implementation of SDN and NFV technologies in IP network 18 makes a wide range of possible actions on network elements of IP network 18 available to OSS 12.

OSS 12 is typically configured to collect statistics and traces from the network to aid understanding of how well data is flowing. In modern networks, performance management has become as critical to operations as fault management. Network conditions data available from OSS 12 measure the objective customer experience from a technical point of view.

As displayed in Fig. 1, network conditions collection component 102 is configured to collect network conditions data indicating a connection quality of the connection of subscribers 10 with IP network 18 and/or a data network via the IP network 18. Network conditions collection component 102 may be configured for correlating, massaging, and enriching the network conditions data, and finally, for coalescing them into events suitable to be provided to predictor model manager 106.

Network conditions data may comprise data from network probes that retrieve data by polling from network elements of IP network 18, data from voice probes relating to the quality of voice over IP over IP network 18, or data from video probes relating to the quality of video streamed over IP network 18. Network conditions data available from OSS 12 may also include radio access network (RAN) metrics, RAN traces, data from different network slices (5G networks), and data from a core network of IP network 18 such as data on latencies, data on packet drops, data on throughputs, or data on a streaming quality. Network conditions may further be collected from Performance Management/Fault Management systems, logs or counters on network elements of the IP network 18, or be inferred from service-based architecture messages. The network conditions data may also allow inferring a geographical location of a subscriber 10.

OSS 12 may be configured to act on network elements of the IP network to avert degradation of service to subscribers. If service performance degrades for a customer, the impact for them can be as disruptive as a physical fault because more and more critical operations depend on data networks. In addition, telecom service providers often enter service level agreements that define that a set of specific services with specified quality parameters according to the needs of a given customer be guaranteed, implying the need to technically ensure that the specified service quality is maintained. For example, service level agreements may imply that the telecom service provider must ensure certain throughputs, jitter, data rates, or that a mean time between failures and mean time to repair are above certain thresholds.

The telecom service provider network comprises one or more Business Support Systems (BSS) 14 that are employed to manage subscriber touchpoints, such as front office processes supporting commercial, revenue, and customer-relationship activities. BSS 14 provides applications for customer-facing jobs like capturing order details, starting the billing process, and sending customer notifications regarding cost. Therefore, BSS 14 stores a wealth of subscriber touchpoints data. Subscriber touchpoints data provided by BSS 14 may thus include detailed customer orders comprising data such as service type, optional service parameters, a service level agreement, an average revenue per user (ARPU) of a subscriber, a subscriber ID, and an origin and termination of the service. Additionally, BSS 14 may be employed to plan timescales and engineer visits.

BSS 14 typically also includes services for a customer care hotline or a complaint service that, for example, receives tickets on problems encountered by subscribers. Subscriber touchpoints data provided by BSS 14 may thus include subscriber feedback data, such as complaints and tickets relating to problems encountered by subscribers. Subscriber touchpoints data provided by BSS 14 may also include crowd-sourced data like speed tests.

As illustrated in Fig. 1, subscriber touchpoints collection component 104 may be configured to collect subscriber touchpoints data from BSS 14. Subscriber touchpoints collection component 104 may be equipped to collect and correlate all data coming from the one or more BSS 14. Subscriber touchpoints collection component 104 may further massage and enrich the subscriber touchpoints data from BSS 14. Finally, subscriber touchpoints collection component 104 may coalesce the data into events suitable to be provided to predictor model manager 106. Subscriber touchpoints collection component 104 may in particular be configured for collecting subscriber feedback data based on interactions of subscribers with BSS 14 of the telecom service provider network.

Subscriber touchpoints collection component 104 may be configured to extract tags from the received subscriber feedback data, the tags scoring the subscriber perceived service quality of the telecom network. In embodiments, tags with scores of least good, bad or fair are employed for tagging data from OSS 12. Tags may involve other natural-language hints for explanation, such as a description of subscriber experience or a description of problems subscribers are facing. Subscriber feedback data provided by BSS 14 may specifically comprise a net promoter score, which is typically a number from 1 to 5 or 1 to 10. The net promoter score may be employed by subscriber touchpoints collection component 104 to generate a tag with a corresponding score.

Subscriber feedback data collected by subscriber touchpoints collection component 104 may further comprise data on complaints by the subscriber. Complaints by the subscribers are employed to tag network conditions with a very low score. Subscriber feedback data may further comprise data collected from surveys, such as NPS surveys, which may also be employed to generate corresponding tags.

In embodiments, predictor model manager 106 may be configured to correlate the tags of perceived service quality of the telecom service provider network, as provided by subscriber touchpoints collection component 104, with network conditions data provided by network conditions collection component 102 to generate tagged network conditions data. Correlating the tags with the network conditions data of the telecom service provider network comprises tagging data relating to a connection quality of a subscriber with a tag of the particular subscriber that score his or her perceived level of quality of service, if such a tag is available. Because touchpoints of the subscribers with BSS 14 are rare, only a small subset of the network conditions data can be tagged.

Predictor model manager 106 is configured for evaluating machine learning models to match network conditions data with subscriber touchpoints data, to generate predictions, explanations of the predictions, and proposals of next-best actions to improve the current service quality.

Predictions generated by predictors 108 may comprise predictions for a degradation of perceptual customer experience and the technical reasons for the degradation. An output of the predictors 108 may include a list of subscribers that are encountering network problems. In embodiments, predictions formed by predictors 108 further comprise predictions for network outages, network anomalies, subscriber problems with customer experience, subscriber churn, or a likelihood of a subscriber to call the customer service. Predictions of network anomalies may be employed to detect security issues and fraud related to subscribers 10.

In more detail, predictor model manager 106 employs the tagged network conditions data as training data for a machine-learning algorithm. Machine learning tools have achieved considerable successes in recent years and an ever-growing number of disciplines rely on it. In machine learning, a goal is to employ training data that comprise data and corresponding known output to infer a function that best maps the data to the output. This function can then be applied to novel data to generate a prediction.

Predictors 108 may be trained based on various algorithms of machine learning to best infer a quality of service of the telecom service provider network based on received network conditions data. Specifically, predictor model manager 106 may be configured to employ a supervised machine-learning algorithm to train a predictor using the tagged network conditions data to yield a predictor for the service quality of the telecom service provider network. Training of a machine-learning model based on the tagged network conditions data usually comprises splitting the tagged network conditions data in a training set employed to train the model and a validation set used to tune hyperparameters of the machine learning model.

Predictor model manager 106 may additionally or alternatively employ an unsupervised machine-learning algorithm that employs data from network conditions collection component 102. By unsupervised learning algorithms a predictor is trained employing training data that do not contain tags corresponding to a known output. Unsupervised learning algorithms infer a prediction by identifying previously unknown patterns in data sets. Predictions generated by a predictor 108 trained with unsupervised methods may comprise predictions for network anomalies, predictions for node behavior, or predictions for network behavior.

In embodiments, predictions may further involve providing predictions for individual subscribers from both a predictor trained with a supervised machine-learning algorithm and from a predictor trained with an unsupervised machine-learning algorithm. In these embodiments, the system may further identify common characteristics of the subscribers, for example, that subscribers employ the same serving nodes or access the same over-the-top content applications. The system may then group such subscribers and identify network or service problems of the IP network 18 based on the predictions, the common features, and the grouping of the subscribers.

In other embodiments, learning a predictor of the plurality of predictors 108 may be based on a semi-supervised learning algorithm.

In further embodiments, predictor model manager 106 may employ an automated machine learning approach that involves analyzing multiple different machine learning techniques and candidate models before selecting one or more of the candidate models as predictors 108 from the candidate models that achieve the best performance. The predictor model manager may furthermore automatically select and construct appropriate features, optimize hyperparameters of chosen machine learning models by training with training data from network conditions collection component 102 and subscriber touchpoints collection component 104, and may include steps of post-processing of the machine learning models. Specifically, Predictor model manager 106 may be configured for selecting candidate models from among XGBoost models, Random Forest models, convolutional neural networks, recurrent neural networks, and other comparable models. Performance of a predictor may be measured by metrics like an f1-score, or may be based on a ROC (Receiver Operating Characteristics) curve that shows the performance of a classification model at all classification thresholds. Selecting models for optimal performance may also be based on an AuC (Area under Curve) which provides a score of performance across all possible classification thresholds.

The models yielded from selecting models achieving the best performance by predictor model manager 106 may also yield an ensemble of models that includes several models that in combination yield the best performance. The one or more predictors 108 may thus comprise an ensemble of models trained with respective supervised machine learning models employing the tagged network conditions data, and a second ensemble of models trained with respective unsupervised machine learning models disregarding the tags of the tagged network conditions data. Employing the unsupervised predictors in addition to the supervised predictors allows uncovering additional insight on problems and issues in the IP network 18. The ensembles of models may be stacked ensembles trained by a super learner algorithm.

The predictor model manager may further be configured for providing explanations of the model predictions, such that the predictions can be understood and trusted by human supervisors of the network. For this purpose, the prediction model manager may use techniques to infer top impacting factors, generating Shapley additive explanations (SHAP) values or a local interpretable model-agnostic explanation (LIME). The SHAP value shows how each data point contributes either positively or negatively to the prediction based on a marginal contribution of the data point to the prediction. LIME provides a local predictive model that can be used to explain predictions of the machine learning models under the current circumstances. According to the LIME approach, an interpretable model is built that fits the predictions formed by a predictor 108 locally.

Training of the models according to the principles explained with respect to Fig. 1 may be performed periodically. In this case, technical data from the network are collected by network conditions collection component 12 over a period of time, subscriber feedback data may be collected by subscriber touchpoints collection component 14 over the same period of time, and predictors 108 may be re-trained with tagged network conditions data yielded from correlating the technical data from the network and the subscriber feedback data of the period of time.

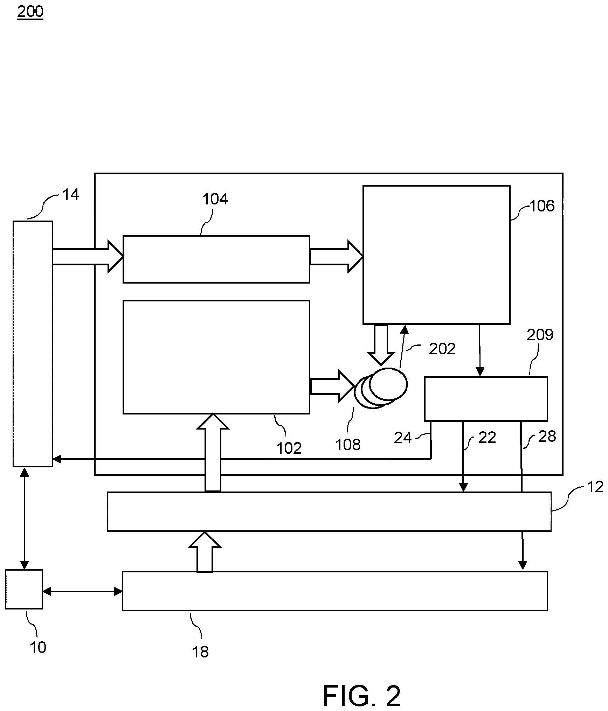

Alternatively, predictors 209 may be trained concurrently to application of the models as predictors, as will be explained below with reference to Fig. 2.

Figure 2 illustrates an evaluation path of the trained system. After predictors 108 have been trained according to the principles explained above, current network conditions data arising from the connection of subscribers 10 with a data network via the IP network 18 are provided from OSS 12 to network conditions collection component 102. Network conditions collection component 102 is configured to massage and enrich the network conditions data and to provide them to predictors 108, which generate prediction 202 for the current service quality of the telecom service provider network.

Prediction 202 is provided to predictor model manager 106 that also receives subscriber touchpoints data from subscriber touchpoints collection component 104. Subscriber touchpoints data such as data on demographics, a current price plan, an ARPU level may be employed by the predictor model manager together with prediction 202 to propose actions suitable for the particular subscriber. In an embodiment, prediction 202 and subscriber touchpoints data is fed to a rule-based engine comprising a rule base and an inference engine. The rule-based engine infers information on issues of the telecom subscriber network and proposes an action on OSS 12, IP network 18, or BSS 14 to improve the service quality.

Predictors as described above may predict network behavior, for example, anomalies in network traffic or a major network outage in a particular geographical region. Predictors may also comprise predictive models for subscriber behavior, for example, a likelihood to call customer service or a likelihood to make a complaint.

Proposals on suitable actions are provided from the predictor model manager 106 to actuator manager 209. Based on the proposed actions and on a business logic defined by the network operator, actuator manager 209 may act 28 on elements after IP network 18, or may act 22 on OSS 12, or may act 24 on BSS 14 to mitigate problems in the network to improve the service quality provided to subscribers.

Actions of actuator manager 209 on OSS 12 and the IP network 18 may include upgrading a capacity of network elements by changing a configuration of network nodes. In embodiments, data network 18 comprises virtual network devices and the capacity of network elements may be updated by adjusting configuration settings of the virtual network. Actions on the network may further comprise upgrading of links between nodes, for example, by changing configuration settings of virtual network devices, routing tables, or flow tables of an SDN network In embodiments, links between nodes may be upgraded to improve a latency of connection between geographical regions.

Similarly, actions of actuator manager 209 may comprise a proposal to update a number of cells in an area of a cellular radio access network. Additionally, different policies may be applied to customers in dependence on an ARPU level. Specific valuable subscribers may be profiled to give them better experience. Actions of actuator manager 209 on OSS 12 may also comprise throttling user traffic or give precedence to user traffic for particular subscribers, for example to improve overall service quality of the telecom service provider network.

Furthermore, actions of actuator manager 209 may involve initiating campaigns to subscribers suggesting upgrading their own hardware devices. With upgraded hardware devices, perceived quality of service of the network is improved. In particular, perceived quality of service after a hardware upgrade at the subscriber end will better reflect network conditions as provided by IP network 18, so that future training data will be of better quality.

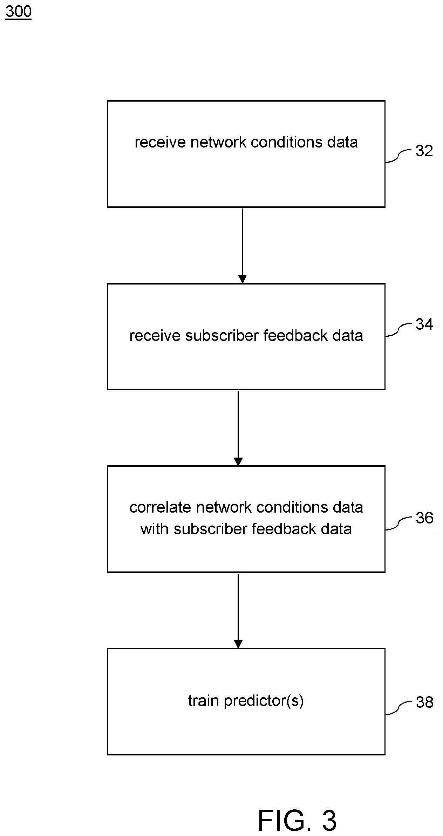

Figure 3 illustrates a method 300 of training predictors for improving the service quality of a telecom service provider as explained with reference to Fig. 1 above. Method 300 comprises receiving 32 network conditions data, receiving 34 subscriber feedback data, and correlating 36 the network conditions data with the subscriber feedback data, which may comprise tagging network conditions data relating to measures of connection quality of a particular subscriber with subscriber feedback data received from the particular subscriber.

Method 300 further comprises training 38 of predictors. As explained with reference to Fig. 1, training predictors may comprise training a plurality of models and selecting a model or a combination of models achieving the highest performance. After training is finished, the parameters of the trained models are stored on computer memory for later access.

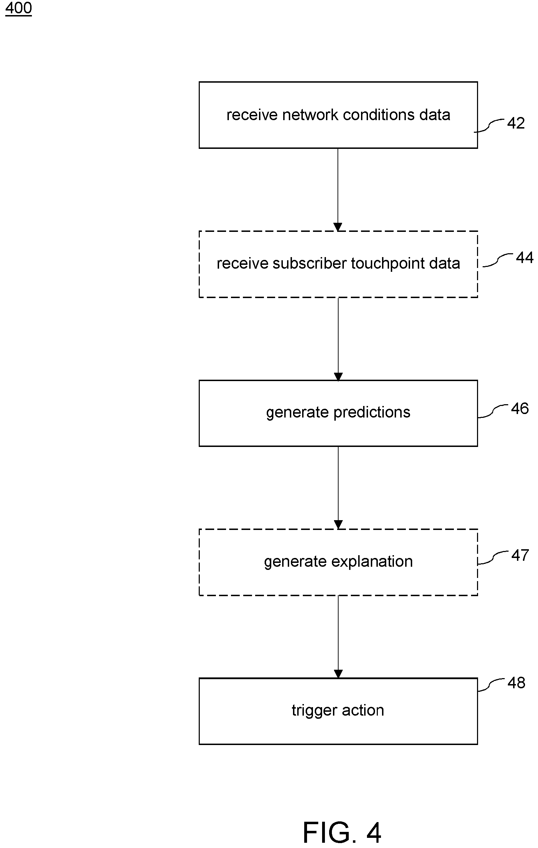

Figure 4 illustrates a process flow for a method 400 of generating predictions for the service quality of a telecom service provider network. Method 400 comprises receiving 42 network conditions data. Method 400 may optionally also comprise receiving 44 subscriber touchpoint data.

Based on the network conditions data, predictions for the current level of service quality are generated 46 by one or more trained predictors 108. Generating predictions may involve evaluating predictor models and detecting anomalies in the telecom service provider network.

Based on the generated predictions, and, optionally, on subscriber touchpoint data, actions on OSS 12, IP network 18, and/or BSS 14 may be triggered 48 to improve the service quality, as explained above with reference to Fig. 2. Triggered actions may be based on a next best action suggestion, and/or on an automatic root cause analysis.

Triggered actions on OSS 12 may comprise actions on a policy server of the IP network 18. Based on the predictions, the policy server may be configured to throttle subscriber traffic or give precedence to subscriber traffic, apply different policies to special very important customers in terms of ARPU, or initiate sending of campaigns to subscribers suggesting to upgrade their handsets due to their poor performance.

Triggered actions on the IP network 18 may involve changing a configuration of network elements of IP network 18 to improve their performance, changing configurations of routing of data packets, updates to connect new nodes to IP network 18, and changes to devices' software or firmware. Triggered actions on the IP network 18 may specifically comprise actions on a packet gateway, or a virtual packet gateway of IP network 18.

Method 400 may further comprise generating an explanation of the predictions as explained above, and notifying human operators of the explanation for the level of service quality of the telecom service provider network.

Training of models according to method 300 may be performed periodically as explained above. Alternatively, methods 300 and 400 may be performed concurrently in real-time to yield new instances of predictors concurrently to previous predictors being applied. Concurrently training new predictors is advantageous in a case when predefined predictors identify a case of severe degradation of service quality. In this case, new instances of predictors may be generated that are specifically trained to the current situation of a severed degradation of service quality and thus are better fitted to isolating probable causes for the severe degradation.

Concurrent training of the predictors may also comprise re-training existing model by considering new arriving data as training data and applying stochastic gradient descent to the weights of the predictors.

Embodiments of the disclosed invention thus allow self-management of a telecom service provider network. The present disclosure proposes employing subscriber feedback data from business support systems of a telecom service provider network to generate training data for machine learning algorithms.

In particular, employing subscriber feedback data overcomes the problem that it is expensive to collect high quality data on relevant measures of the service quality of a telecom service provider network. In particular, because subscribers are geographically distributed and have direct access to communication end points of the IP network, data collected from subscriber feedback data allows generating high quality training data that can be used to train predictors to high performance.

Thereby, methods disclosed herein allow operation of a network in an autopilot mode involving automatically triggering actions to improve service quality of the telecom service provider network based on predictions generated by the trained predictors.

## Claims

1. A computer-implemented method (400) of training and employing predictors for improving the service quality of a telecom service provider network, the telecom service provider network providing subscribers (10) access to a data network (18), the method (40) comprising:
obtaining (32) network conditions data indicating a connection quality of the subscribers (10) with the data network (18);
obtaining (34) subscriber feedback data based on interactions of subscribers (10) with a set of business support systems (14) of the telecom service provider network;
correlating (36) the network conditions data with tags extracted from the subscriber feedback data to obtain tagged network conditions data;
training (38) one or more predictors (108) for the service quality of the telecom service provider network, the training of the predictors employing the tagged network conditions data,
further comprising:
obtaining (410) second network conditions data indicating a current connection quality of the subscribers (10) with the data network (18);
generating (412) predictions (202) for the service quality of the telecom service provider network by providing the second network conditions data to a trained predictor of the one or more predictors (108); and
employing a rule-based engine to, based on the predictions (202), propose actions to improve the service quality of the telecom service provider network and
further comprising extracting an explanation from the one or more trained predictors (108) allowing an interpretation of the predictions (202), wherein extracting the explanation comprises analyzing top impacting factors that impact the predictions generated by the one or more predictors.

2. The method of claim 1, wherein training (408) the one or more predictors (108) comprises training a first predictor according to a supervised machine learning algorithm.

3. The method of claim 1 or claim 2, wherein training (46) the one or more predictors (108) comprises, for each predictor, training a plurality of models and selecting a model based on a performance metric, wherein the performance metric is based on at least one of an f1-score, a ROC curve, and an AuC..

4. The method of claim 3, wherein the plurality of models includes an XGBoost model, a Random-Forest model, a convolutional neural network model, and a recurrent neural network model.

5. The method of claim 2, wherein training (408) the one or more predictors (108) further comprises training a second predictor according to an unsupervised machine learning algorithm.

6. The method of one of claims 1 to 5, further comprising employing the rule-based engine to, based on the predictions (202), trigger (414) the actions to improve the service quality of the telecom service provider network.

7. The method of claim 6, wherein the actions comprise at least one of actions (22) on an operations support system (12) of the telecom service provider network or actions (26) on elements of the data network (18).

8. The method of claim 6 or claim 7, wherein employing the rule-based engine to trigger (414) the actions comprises applying an automatic root cause analysis.

9. The method of one of claims 6 to 8, wherein training (408) of the one or more predictors (108) is performed periodically or is performed concurrently to generating (412) predictions (202).

10. The method of one of claims 1 to 9, wherein the predictions comprise at least one of predictions of network outages and predictions of network traffic anomalies.

11. The method of one of claims 1 to 10, wherein the network conditions data comprise at least one of data from data probes, data from voice probes, RAN metrics, RAN traces, metrics of a packet core network of the IP network (18), network slices metrics, data from Performance Management/Fault Management systems, logs and counters from network elements of the IP network (18), and service-based architecture messages, wherein the metrics of the packet core network comprise at least one of data on latencies, data on packet drops, data on throughputs, and data on a streaming quality.

12. A system (100) for generating predictions for improving the service quality of a telecom service provider network, the telecom service provider network providing subscribers (10) access to a data network (18), the system (100) comprising:
a network conditions collection component (102) configured for collecting network conditions data indicating a connection quality of the subscribers (10) with the data network (18);
a subscriber touchpoints collection component (104) configured for collecting subscriber touchpoint data comprising subscriber feedback data based on interactions of the subscribers (10) with a business support system (14) of the telecom service provider network; and
a predictor model manager (109) configured to train one or more predictors (108) for the service quality, the training employing tagged network conditions data obtained from correlating the network conditions data with tags extracted from the subscriber feedback data,
wherein the system (100) is further configured for:
obtaining second network conditions data indicating a current connection quality of the subscribers (10) with the data network (18);
generating predictions (202) for the service quality of the telecom service provider network by providing the second network conditions data to a trained predictor of the one or more predictors (108); and
employing a rule-based engine to, based on the predictions (202), propose actions to improve the service quality of the telecom service provider network, and
wherein the system (100) is further configured for extracting an explanation from the one or more trained predictors (108) allowing an interpretation of the predictions (202), wherein extracting the explanation comprises analyzing top impacting factors that impact the predictions (202) generated by the one or more predictors (108).

13. The system of claim 12, further comprising an actuator manager (209) configured to, based on predictions (202) of the one or more predictors, trigger actions (22, 28) to improve the service quality of the telecom service provider network.

14. The system of claim 12 or claim 13, wherein the network conditions collection component (102) is configured for massaging the network conditions data and for coalescing the network conditions data in events supplied to the predictor model manager (109), and the subscriber touchpoints collection component (104) is configured for massaging the subscriber feedback data and for coalescing the subscriber feedback data in events supplied to the predictor model manager (109).

## Patentansprüche

1. Computerimplementiertes Verfahren (400) zum Trainieren und Verwenden von Prädiktoren zum Verbessern der Dienstqualität eines Telekommunikations-Dienstanbieternetzes, wobei das Telekommunikations-Dienstanbieternetz Teilnehmern (10) Zugang zu einem Datennetz (18) bietet, wobei das Verfahren (40) umfasst:
Beziehen (32) von Netzzustandsdaten, die eine Verbindungsqualität der Teilnehmer (10) mit dem Datennetz (18) anzeigen;
Beziehen (34) von Teilnehmer-Rückmeldedaten, die auf Interaktionen von Teilnehmern (10) mit einem Satz von Geschäftsunterstützungssystemen (14) des Telekommunikations-Dienstanbieternetzes basieren;
Korrelieren (36) der Netzzustandsdaten mit Markierungen, die aus den Teilnehmer-Rückmeldedaten extrahiert wurden, um markierte Netzzustandsdaten zu erhalten;
Trainieren (38) eines oder mehrerer Prädiktoren (108) für die Dienstqualität des Telekommunikations-Dienstanbieternetzes, wobei das Trainieren der Prädiktoren die markierten Netzzustandsdaten verwendet,
weiterhin umfassend:
Beziehen (410) von zweiten Netzbedingungsdaten, die eine aktuelle Verbindungsqualität der Teilnehmer (10) mit dem Datennetz (18) anzeigen;
Erzeugen ( 412) von Vorhersagen (202) für die Dienstqualität des Telekommunikations-Dienstanbieternetzes durch Bereitstellen der zweiten Netzzustandsdaten an einen trainierten Prädiktor des einen oder der mehreren Prädiktoren (108); und
Einsetzen einer regelbasierten Maschine, um auf der Grundlage der Vorhersagen (202) Maßnahmen zur Verbesserung der Dienstqualität des Telekommunikations-Dienstanbieternetzes vorzuschlagen, und
weiterhin umfassend das Extrahieren einer Erklärung aus dem einen oder den mehreren trainierten Prädiktoren (108), die eine Interpretation der Vorhersagen (202) ermöglicht, wobei das Extrahieren der Erklärung das Analysieren der sich am stärksten auswirkenden Faktoren umfasst, die die von dem einen oder den mehreren Prädiktoren erzeugten Vorhersagen beeinflussen.

2. Verfahren nach Anspruch 1, bei dem das Trainieren (408) des einen oder der mehreren Prädiktoren (108) das Trainieren eines ersten Prädiktors gemäß einem überwachten maschinellen Lernalgorithmus umfasst.

3. Verfahren nach Anspruch 1 oder Anspruch 2, bei dem das Trainieren (46) des einen oder der mehreren Prädiktoren (108) für jeden Prädiktor das Trainieren einer Vielzahl von Modellen und das Auswählen eines Modells auf der Grundlage einer Leistungsmetrik umfasst, wobei die Leistungsmetrik auf wenigstens einem von einem f1-Score, einer ROC-Kurve und einem AuC. basiert.

4. Verfahren nach Anspruch 3, bei dem die Vielzahl der Modelle ein XGBoost-Modell, ein Random-Forest-Modell, ein Faltungsneuronalnetzmodell und ein rekurrentes Neuronalnetzmodell umfasst.

5. Verfahren nach Anspruch 2, bei dem das Trainieren (408) des einen oder der mehreren Prädiktoren (108) weiterhin das Trainieren eines zweiten Prädiktors gemäß einem un-überwachten maschinellen Lernalgorithmus umfasst.

6. Verfahren nach einem der Ansprüche 1 bis 5, weiterhin umfassend den Einsatz der regelbasierten Maschine, um auf der Grundlage der Vorhersagen (202) die Aktionen zur Verbesserung der Dienstqualität des Telekommunikations-Dienstanbieternetzes auszulösen (414).

7. Verfahren nach Anspruch 6, bei dem die Aktionen Aktionen (22) an einem Betriebsunterstützungssystem (12) des Telekommunikations-Dienstanbieternetzes und/oder Aktionen (26) an Elementen des Datennetzes (18) umfassen.

8. Verfahren nach Anspruch 6 oder Anspruch 7, bei dem die Verwendung der regelbasierten Maschine zum Auslösen (414) der Aktionen die Anwendung einer automatischen Ursachenanalyse umfasst.

9. Verfahren nach einem der Ansprüche 6 bis 8, bei dem das Trainieren (408) des einen oder der mehreren Prädiktoren (108) periodisch oder gleichzeitig mit der Erzeugung (412) von Vorhersagen (202) ausgeführt wird.

10. Verfahren nach einem der Ansprüche 1 bis 9, bei dem die Vorhersagen das Vorhersagen von Netzausfällen und/oder Vorhersagen von Netzverkehrsanomalien umfassen.

11. Verfahren nach einem der Ansprüche 1 bis 10, bei dem die Netzzustandsdaten wenigstens eines der folgenden Elemente umfassen: Daten von Datensonden, Daten von Sprachsonden, RAN-Metriken, RAN-Ablaufverfolgungen, Metriken eines Paketkernnetzes des IP-Netzes (18), Netzslices-Metriken, Daten von Leistungsmanagement-/Fehlermanagementsystemen, Protokolle und Zähler von Netzelementen des IP-Netzes (18) und dienstbasierte Architekturnachrichten, wobei die Metriken des Paketkernnetzes wenigstens eines der folgenden Elemente umfassen: Daten über Latenzen, Daten über Paketverluste, Daten über Durchsätze und Daten über eine Streaming-Qualität.

12. System (100) zum Erzeugen von Vorhersagen zum Verbessern der Dienstqualität eines Telekommunikations-Dienstanbieternetzwerks, wobei das Telekommunikations-Dienstanbieternetzwerk Teilnehmern (10) Zugang zu einem Datennetzwerk (18) bietet, wobei das System (100) umfasst:
eine Netzzustands-Erfassungskomponente (102), die zum Erfassen von Netzzustandsdaten eingerichtet ist, die eine Verbindungsqualität der Teilnehmer (10) mit dem Datennetz (18) anzeigen;
eine Teilnehmer-Touchpoint-Sammelkomponente (104), die zum Sammeln von Teilnehmer-Touchpoint-Daten eingerichtet ist, die Teilnehmer-Rückmeldedaten auf der Grundlage von Interaktionen der Teilnehmer (10) mit einem Geschäftsunterstützungssystem (14) des Telekommunikations-Dienstanbieternetzes umfassen; und
einen Prädiktormodellmanager (109), der dazu eingerichtet ist, einen oder mehrere Prädiktoren (108) für die Dienstqualität zu trainieren, wobei das Training markierte Netzzustandsdaten verwendet, die durch Korrelieren der Netzzustandsdaten mit Markierungen bezogen werden, die aus den Teilnehmerrückmeldedaten extrahiert werden,
wobei das System (100) weiterhin dazu eingerichtet ist:
zweite Netzzustandsdaten zu beziehen, die eine aktuelle Verbindungsqualität der Teilnehmer (10) mit dem Datennetz (18) anzeigen;
Vorhersagen (202) für die Dienstqualität des Telekommunikations-Dienstanbieternetzes durch Bereitstellen der zweiten Netzzustandsdaten an einen trainierten Prädiktor des einen oder der mehreren Prädiktoren (108) zu erzeugen; und
eine regelbasierte Maschine einzusetzen, um auf der Grundlage der Vorhersagen (202) Maßnahmen zur Verbesserung der Dienstqualität des Telekommunikations-Dienstanbieternetzes vorzuschlagen,
wobei das System (100) weiterhin dazu eingerichtet ist, eine Erklärung aus dem einen oder den mehreren trainierten Prädiktoren (108) zu extrahieren, die eine Interpretation der Vorhersagen (202) ermöglicht, wobei das Extrahieren der Erklärung das Analysieren der sich am stärksten auswirkenden Faktoren umfasst, die sich auf die von dem einen oder den mehreren Prädiktoren (108) erzeugten Vorhersagen (202) auswirken.

13. System nach Anspruch 12, weiterhin umfassend einen Aktuatormanager (209), der dazu eingerichtet ist, auf der Grundlage von Vorhersagen (202) des einen oder der mehreren Prädiktoren Aktionen (22, 28) auszulösen, um die Dienstqualität des Telekommunikations-Dienstanbieternetzes zu verbessern.

14. System nach Anspruch 12 oder Anspruch 13, bei dem die Netzzustands-Erfassungskomponente (102) dazu eingerichtet ist, die Netzbedingungsdaten zu bearbeiten und die Netzbedingungsdaten in Ereignissen zusammenzuführen, die dem Prädiktormodellmanager (109) zugeführt werden, und die Teilnehmer-Touchpoint-Sammelkomponente (104) dazu eingerichtet ist, die Teilnehmerrückmeldedaten zu bearbeiten und die Teilnehmerrückmeldedaten in Ereignissen zusammenzuführen, die dem Prädiktormodellmanager (109) zugeführt werden.

## Revendications

1. Procédé mis en oeuvre par ordinateur (400) de formation et d'utilisation de prédicteurs pour améliorer la qualité de service d'un réseau de fournisseur de services de télécommunication, le réseau de fournisseur de services de télécommunication fournissant aux abonnés (10) un accès à un réseau de données (18), le procédé (40) comprenant :
l'obtention (32) de données de conditions de réseau indiquant une qualité de connexion des abonnés (10) avec le réseau de données (18) ;
l'obtention (34) de données de rétroaction d'abonnés sur la base d'interactions d'abonnés (10) avec un ensemble de systèmes de support commercial (14) du réseau de fournisseur de services de télécommunication ;
la corrélation (36) des données de conditions de réseau avec des balises extraites des données de rétroaction d'abonnés pour obtenir des données de conditions de réseau balisées ;
la formation (38) d'un ou plusieurs prédicteurs (108) pour la qualité de service du réseau de fournisseur de services de télécommunication, la formation des prédicteurs utilisant les données de conditions de réseau balisées,
comprenant en outre :
l'obtention (410) de secondes données de conditions de réseau indiquant une qualité de connexion actuelle des abonnés (10) avec le réseau de données (18) ;
la génération (412) de prédictions (202) pour la qualité de service du réseau de fournisseur de services de télécommunication en fournissant les secondes données de conditions de réseau à un prédicteur formé parmi le ou les plusieurs prédicteurs (108) ; et
l'utilisation d'un moteur basé sur des règles pour proposer, sur la base des prédictions (202), des actions afin d'améliorer la qualité de service du réseau de fournisseur de services de télécommunication et
comprenant en outre l'extraction d'une explication du ou des plusieurs prédicteurs formés (108) permettant une interprétation des prédictions (202), où l'extraction de l'explication comprend l'analyse des principaux facteurs d'impact qui ont un impact sur les prédictions générées par le ou les plusieurs prédicteurs.

2. Procédé de la revendication 1, dans lequel le formation (408) du ou des plusieurs prédicteurs (108) comprend la formation d'un premier prédicteur selon un algorithme d'apprentissage automatique supervisé.

3. Procédé de la revendication 1 ou la revendication 2, dans lequel la formation (46) du ou des plusieurs prédicteurs (108) comprend, pour chaque prédicteur, la formation d'une pluralité de modèles et la sélection d'un modèle sur la base d'une mesure de performance, où la mesure de performance est basée sur un score f1, une courbe ROC et/ou un AuC.

4. Procédé de la revendication 3, dans lequel la pluralité de modèles comprend un modèle XGBoost, un modèle Random-Forest, un modèle de réseau neuronal convolutionnel et un modèle de réseau neuronal récurrent.

5. Procédé de la revendication 2, dans lequel la formation (408) du ou des plusieurs prédicteurs (108) comprend en outre la formation d'un second prédicteur selon un algorithme d'apprentissage automatique non supervisé.

6. Procédé de l'une des revendications 1 à 5, comprenant en outre l'utilisation du moteur basé sur des règles pour, sur la base des prédictions (202), déclencher (414) les actions afin d'améliorer la qualité de service du réseau de fournisseur de services de télécommunication.

7. Procédé de la revendication 6, dans lequel les actions comprennent au moins une des actions (22) sur un système de support d'opérations (12) du réseau de fournisseur de services de télécommunication ou des actions (26) sur des éléments du réseau de données (18).

8. Procédé de la revendication 6 ou la revendication 7, dans lequel l'utilisation du moteur basé sur des règles pour déclencher (414) les actions comprend l'application d'une analyse automatique des causes profondes.

9. Procédé de l'une des revendications 6 à 8, dans lequel la formation (408) du ou des plusieurs prédicteurs (108) est effectuée périodiquement ou est effectuée simultanément à la génération (412) de prédictions (202).

10. Procédé de l'une des revendications 1 à 9, dans lequel les prédictions comprennent au moins l'une des prédictions de pannes de réseau et des prédictions d'anomalies de trafic de réseau.

11. Procédé de l'une des revendications 1 à 10, dans lequel les données de conditions de réseau comprennent au moins l'un parmi des données provenant de sondes de données, des données provenant de sondes vocales, des mesures RAN, des traces RAN, des mesures d'un réseau central de paquets du réseau IP (18), des mesures de tranches de réseau, des données provenant de systèmes de gestion des performances/gestion des pannes, des journaux et des compteurs provenant d'éléments de réseau du réseau IP (18), et des messages d'architecture basés sur des services, dans lequel les mesures du réseau central de paquets comprennent au moins l'une parmi des données sur les latences, des données sur les pertes de paquets, des données sur les débits et des données sur une qualité de streaming.

12. Système (100) de génération de prédictions pour améliorer la qualité de service d'un réseau de fournisseur de services de télécommunication, le réseau de fournisseur de services de télécommunication fournissant aux abonnés (10) un accès à un réseau de données (18), le système (100) comprenant :
un composant de collecte de conditions de réseau (102) configuré pour collecter des données de conditions de réseau indiquant une qualité de connexion des abonnés (10) avec le réseau de données (18) ;
un composant de collecte de points de contact d'abonnés (104) configuré pour collecter des données de points de contact d'abonnés comprenant des données de rétroaction d'abonnés sur la base des interactions des abonnés (10) avec un système de support commercial (14) du réseau de fournisseur de services de télécommunication ; et
un gestionnaire de modèle de prédicteur (109) configuré pour former un ou plusieurs prédicteurs (108) pour la qualité de service, la formation utilisant des données de conditions de réseau balisées obtenues à partir de la corrélation des données de conditions de réseau avec des balises extraites des données de rétroaction d'abonnés,
dans lequel le système (100) est en outre configuré pour :
obtenir des secondes données de conditions de réseau indiquant une qualité de connexion actuelle des abonnés (10) avec le réseau de données (18) ;
générer des prédictions (202) pour la qualité de service du réseau de fournisseur de services de télécommunication en fournissant les secondes données de conditions de réseau à un prédicteur formé parmi le ou les plusieurs prédicteurs (108) ; et
utiliser un moteur basé sur des règles pour proposer, sur la base des prédictions (202), des actions afin d'améliorer la qualité de service du réseau de fournisseur de services de télécommunication, et
dans lequel le système (100) est en outre configuré pour extraire une explication du ou des plusieurs prédicteurs formés (108) permettant une interprétation des prédictions (202), dans lequel l'extraction de l'explication comprend l'analyse des facteurs d'impact principaux qui ont un impact sur les prédictions (202) générées par le ou les plusieurs prédicteurs (108).

13. Système de la revendication 12, comprenant en outre un gestionnaire d'actionneurs (209) configuré pour déclencher, sur la base des prédictions (202) du ou des plusieurs prédicteurs, des actions (22, 28) afin d'améliorer la qualité de service du réseau de fournisseur de services de télécommunication.

14. Système de la revendication 12 ou la revendication 13, dans lequel le composant de collecte de conditions de réseau (102) est configuré pour manipuler les données de conditions de réseau et pour fusionner les données de conditions de réseau dans des événements fournis au gestionnaire de modèle de prédicteur (109), et le composant de collecte de points de contact d'abonnés (104) est configuré pour manipuler les données de rétroaction d'abonnés et pour fusionner les données de rétroaction d'abonnés dans des événements fournis au gestionnaire de modèle de prédicteur (109).
